# EUROPEAN PATENT SPECIFICATION

(11) **EP 4 651 425 B1**
(45) Date of publication and mention of the grant of the patent: **25.11.2026**
(21) Application number: 25177100.2
(22) Date of filing: 16.05.2025
(51) Int. Cl.: H04L 9/00

(54) **SECURE AGGREGATION WITH ONE-SHOT CLIENTS**
SICHERE AGGREGATION MIT ONE-SHOT-CLIENTS
AGRÉGATION SÉCURISÉE AVEC DES CLIENTS À UNE SEULE FOIS

(30) Priority: 17.05.2024 US 202463648788 P; 15.05.2025 US 202519209742
(43) Date of publication of application: 19.11.2025
(73) Proprietor: GOOGLE LLC, Mountain View CA 94043 (US)
(72) Inventor: GASCON, Adrian, 94043 Mountain View (US); RAYKOVA, Mariana, 94043 Mountain View (US); BELL-CLARK, James Henry, 94043 Mountain View (US); LI, Baiyu, 94043 Mountain View (US); SCHOPPMANN, Phillipp, 94043 Mountain View (US)
(74) Representative: Derry, Paul Stefan

(56) References cited:
- YIPING MA ET AL: "Flamingo: Multi-Round Single-Server Secure Aggregation with Applications to Private Federated Learning", ARXIV.ORG, CORNELL UNIVERSITY LIBRARY, 201 OLIN LIBRARY CORNELL UNIVERSITY ITHACA, NY 14853, 3 November 2023 (2023-11-03), XP091652513, DOI: 10.1109/SP46215.2023.10179434
- XINCHENG LI ET AL: "Fluent: Round-efficient Secure Aggregation for Private Federated Learning", ARXIV.ORG, CORNELL UNIVERSITY LIBRARY, 201 OLIN LIBRARY CORNELL UNIVERSITY ITHACA, NY 14853, 10 March 2024 (2024-03-10), XP091697019

## Description

### TECHNICAL FIELD

Aspects and implementations of the present disclosure relate to secure aggregation with one-shot clients.

### BACKGROUND

Secure aggregation allows a group of mutually distrustful parties, each holding a respective private value, to collaborate for computing an aggregate value of their private values, without revealing to one another any information about their private values, except what is learnable from the aggregate value itself. Secure aggregation has a wide range of applications, e.g., private analytics and federated learning.

Fluent: Round-efficient Secure Aggregation for Private Federated Learning by Li et al https://arxiv.org/abs/2403.06143 discloses Fluent, a round and communication-efficient secure aggregation scheme for private FL. Fluent (1) eliminates frequent handshakes and secret sharing operations by efficiently reusing the shares across multiple training iterations without leaking any private information; and (2) accomplishes both the consistency check and gradient unmasking in one logical step, thereby reducing another round of communication. Fluent also introduces Fluent-Dynamic with a participant selection algorithm and an alternative secret sharing scheme.

Flamingo: Multi-Round Single-Server Secure Aggregation with Applications to Private Federated Learning by Ma et al https://eprint.iacr.org/2023/486 discloses Flamingo, a system for secure aggregation of data across a large set of clients.. Flamingo focuses on the multi-round setting found in federated learning in which many consecutive summations (averages) of model weights are performed to derive a good model. Flamingo eliminates the need for the per-round setup of previous protocols, and has a new lightweight dropout resilience protocol to ensure that if clients leave in the middle of a sum the server can still obtain a meaningful result.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

The claims define the matter for protection.

Claims 1 and 8 respectively claim a method and a system for implementing a secure aggregation protocol with one-shot clients.

**In** some implementations, the encrypted client input is produced by encrypting the client input by a key-additive homomorphic encryption (KAHE) scheme with the client symmetric key.

**In** some implementations, the encrypted client symmetric key is produced by encrypting the client symmetric key by an additive homomorphic encryption (AHE) scheme with the public key. In some implementations, the method further includes generating an aggregation proof demonstrating that each encrypted client input is included at most once in the combination of encrypted client inputs and sending the aggregation proof to a verifier for validation. In some implementations, receiving the decrypted aggregated key further includes: receiving a respective portion of the decrypted aggregated key from each decryptor of at least threshold number of decryptors of a distributed set of decryptors; and combining the portions of the decrypted aggregated key to obtain the decrypted aggregated key.

**In** some implementations, the decryptor is implemented by a subset of the plurality of clients.

**In** some implementations, the decryptor is implemented by one or more dedicated computing devices.

An aspect of the disclosure provides a system including a memory device and a processing device communicatively coupled to the memory device. The processing device performs the method as described above.

An aspect of the disclosure provides a computer-readable storage medium (which can be a non-transitory computer-readable storage medium, although the disclosure is not limited to that) stores instructions which, when executed, cause a processing device to perform the method as described above.

### BRIEF DESCRIPTION OF DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
Fig. 1 illustrates an example logical structure of a distributed computing system implementing secure aggregation in accordance with aspects of the present disclosure.
Fig. 2 schematically illustrates an example secure aggregation technique implemented in accordance with aspects of the present disclosure.
Fig. 3 schematically illustrates the Key-Additive Homomorphic Encryption (KAHE) scheme that may be employed by a client for encrypting its client dataset.
Fig. 4 schematically illustrates the Additive Homomorphic Encryption (AHE) scheme that may be employed by a client for encrypting its client key.
Fig. 5 is a high-level flow diagram of an example method performed by a client of the secure aggregation methods in accordance with aspects of the present disclosure.
Fig. 6 is a high-level flow diagram of an example method performed by the server of the secure aggregation methods in accordance with aspects of the present disclosure.
Fig. 7 is a high-level flow diagram of another example method performed by the server of the secure aggregation methods in accordance with aspects of the present disclosure.
Fig. 8 is a high-level flow diagram of an example method performed by the decryptor of the secure aggregation methods in accordance with aspects of the present disclosure.
Fig. 9 is a block diagram illustrating an exemplary computer system, in accordance with implementations of the present disclosure.

### DETAILED DESCRIPTION

Aspects of the present disclosure relate to secure aggregation with one-shot clients. Secure aggregation allows a group of mutually distrustful parties, each holding a respective private value, to collaborate for computing an aggregate value of their private values, without revealing to one another any information about their private values, except what is learnable from the aggregate value itself. In some implementations, secure aggregation enables a server to learn an aggregate of the inputs of many clients without learning the individual inputs.

A common drawback of secure vector summation protocols in the single-server model is that they impose at least one synchronization point between all clients contributing data to the aggregation. This may result in clients waiting on each other to advance through the rounds of the protocol, thus increasing the overall latency.

Another challenge in secure aggregation is ensuring the integrity of the aggregated result. Malicious actors or system errors could potentially introduce incorrect data or manipulate the aggregation process. Verifying the correctness of the aggregation while maintaining privacy presents a complex problem that requires innovative solutions.

Distributed character of systems introduces additional complexities to secure aggregation. Coordinating multiple parties, managing key distribution, and handling potential dropouts or failures are all factors that must be addressed in a robust secure aggregation protocol. Furthermore, scalability becomes a concern as the number of participants increases, necessitating efficient methods for processing and combining large volumes of encrypted data.

Implementations of the present disclosure address the above and other deficiencies by implementing secure aggregation with one-shot clients. The present disclosure describes a single-server aggregation method where a client only needs to send one message in an one-shot fashion, i.e., without the need for synchronizing with any other clients. This one-shot operation may improve scalability and reduce overall protocol latency.

The protocol utilizes a combination of cryptographic techniques, including key-additive homomorphic encryption and threshold decryption, to enable secure aggregation while maintaining privacy. In some cases, the protocol may incorporate verification mechanisms to ensure correctness of the aggregation process.

The protocol employs a committee (e.g., at least a subset) of clients aiding in the computation. Unlike existing committee-based protocols, the computational cost for committee members may be made sub-linear in the number of clients and does not depend on the size of the input data.

In an illustrative example, a server S aims to compute the sum of n vectors xᵢ ∈ F^{ℓ} held by respective clients *C₁, ..., Cₙ.* The pool of clients may include devices with limited connectivity and computational resources. The server may be connected to each of the clients via one or more communication networks.

In operation, the decryptor, which may be implemented by a committee (e.g., at least a subset) of clients or by another server, generates a key pair of the Additive Homomorphic Encryption (AHE) scheme and publishes the public key *pk* of the key pair to the clients. Each active client sends, to the server, a pair of ciphertexts: (a) an encryption of its input under the Key-Additive Homomorphic Encryption (KAHE) scheme using a client key and (b) an encryption of the client key by the AHE scheme. The server adds ciphertexts of each kind as they are received to the respective running sums, resulting in ciphertexts *a* (the combination (e.g., sum) of encrypted client inputs) and b (the combination (e.g., sum) of encrypted client keys) used to produce the respective encrypted client inputs).

The server then transmits, to the decryptor, the running sum of encrypted client keys. The decryptor decrypts, using the secret key corresponding to the public key, the running sum of encrypted client keys and forward the decrypted key to the server. The server utilizes the decrypted key to decrypt the running sum of encrypted client inputs.

In some implementations, the server proves to the verifier that b encrypts the sum of n distinct keys, all coming from different clients. The verifier signs a hash of b, which the decryptor verifies before handing the decryption of *b* to the server.

By allowing one-shot client participation while preserving privacy and security, the described protocol may enable more efficient and reliable secure aggregation in distributed systems. This capability may be particularly beneficial for applications involving large numbers of clients or clients with intermittent network connectivity.

Thus, one technical problem that is solved by the systems and methods of the present disclosure is allowing a server to learn an aggregate of the inputs of many clients without learning the individual inputs.

The technical solution is to employ the AHE scheme for encrypting the client inputs and the KAHE scheme for encrypting the client symmetric keys.

The AHE scheme is a public key threshold additive homomorphic encryption scheme with additive distributed key generation and decryption procedures. The AHE scheme allows each party to generate independently a secret key share and the corresponding public key share *(skⱼ ; pkⱼ)* ← *KeyGen(rⱼ).* The final public key is obtained by aggregating the public key shares *pk* ← *KeyAgg{[pkⱼ}ⱼ).* Each secret key share holder may partially decrypt a ciphertext and obtain *pdⱼ* ← *PartialDec(ct; skⱼ).* The underlying plaintext may be reconstructed from all partial decryptions: *Recover(ct; {pdⱼ}ⱼ).*

The KAHE scheme is a symmetric key encryption scheme with additive key- and message-homomorphisms: given any two ciphertexts *c₁* and *c₂* encrypting *x₁* and *x₂* under keys *k₁* and *k₂* respectively, *c₁+c₂* is a valid encryption of *x₁+x₂* under the key *k₁+k₂.* The KAHE scheme exhibits a leakage-resilient property, which guarantees that, given a number of ciphertexts encrypted under different KAHE keys, revealing the aggregate key only reveals the sum of the encrypted messages.

Another technical problem that is solved by the systems and methods of the present disclosure is allowing each client to submit its inputs without any synchronization with peer clients.

The technical solution is the design of the server and the verifier that allows at least some of the client operations to be performed before receiving the public key from the server, thus placing a very small computational overhead on each of the clients and also minimizing the amount of time each of the clients needs to be online.

Another technical problem that is solved by the systems and methods of the present disclosure is verifying the correctness of the aggregation while maintaining privacy in the distributed environment where malicious actors or system errors could potentially introduce incorrect data or manipulate the aggregation process.

The technical solution is the design of the server and the verifier that employs a public data structure representing the aggregated client inputs, which is generated by the server and is verified by a distributed set of verifiers.

Applications of the secure aggregation systems and methods described herein include both federated analytics tasks and federated learning tasks, as described in more detail below.

Various aspects of the methods and systems are described herein by way of examples, rather than by way of limitation. The systems and methods described herein may be implemented by hardware (e.g., general purpose and/or specialized processing devices, and/or other devices and associated circuitry), software (e.g., instructions executable by a processing device), or a combination thereof.

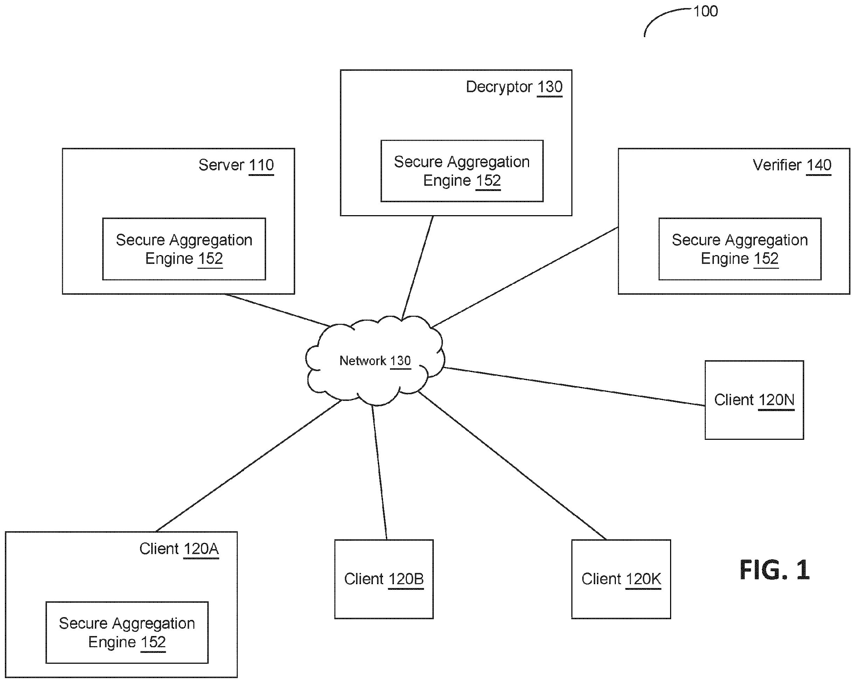

Fig. 1 illustrates an example logical structure of a distributed computing system 100 implementing the secure aggregation method in accordance with aspects of the present disclosure. As shown in Fig. 1, the server 110 may accept requests and transmit responses from/to one or more clients 120A-120Q, which may be connected to the server 110 via a network 130 represented by one or more public (e.g., the Internet) or private networks. The server 110 may coordinate the aggregation process and communicate with the clients 120A-120Q, which may contribute their individual datasets. The method may tolerate some of the clients being corrupt.

The decryptor 130 may be responsible for revealing the final aggregated value without exposing individual client inputs. The decryptor 130 may be instantiated as a committee (e.g., at least a subset) of clients, multiple servers, or a single server that is not the same as the server 110 (as shown in Fig. 1). To guarantee privacy, the decryptor 130 is not allowed to collude with the server 110. This means that a majority of decryptor-implementing servers or clients are assumed to remain honest (un-corrupted).

In the implementations of the secure aggregation protocol that is secure against an actively corrupted server, the verifier 140 may also be present, which may ensure the integrity of the aggregated result. The verifier 140 does not hold any state, and its purpose is to verify a public data structure representing the aggregated client inputs, which is generated by the server 110.

The verifier 140 may be implemented by a designated party (as shown in Fig. 1), by a committee (e.g., at least a subset) of clients, or by a trusted execution environment (via remote attestation, as confidentiality is not a concern here). Similar to the decryptor 130, the verifier 140 is not allowed to collude with the server 110. Thus, the verifier 140 may be implemented by the same one or more components of the distributed system 100 that implement the decryptor.

Various components of the distributed computing system, including the server 110, each client 120A-120Q, the decryptor 130, and the verifier 140, may each include a secure aggregation engine 152, which may be employed to implement secure aggregation, in accordance with implementations described herein. The "engine" here is a purely functional designation of a component that may be implemented by hardware (e.g., one or more processing devices and/or hardware threads), software (e.g., one or more streams of executable instructions), and/or various combinations thereof.

The "servers" and "clients" depicted by Fig. 1 are purely functional designations of the respective components of system 100. Each of the components may be implemented by a suitable physical computer system (e.g., a physical server, a personal computer, a mobile communication device, etc.) or by a virtual machine running on a hardware platform which may be shared with other virtual machines. In some implementations, one or more components of system 100 may be implemented in a cloud-based computing environment. Routers, firewalls, load-balancers, and/or other auxiliary networking components are omitted from Fig. 1 for clarity and conciseness.

The distributed system architecture depicted by Fig. 1 may allow for secure aggregation of data from multiple clients while maintaining privacy and enabling one-shot participation. The separation of roles between the server, verifier, and decryptor may provide additional security guarantees and prevent any single entity from accessing individual client data.

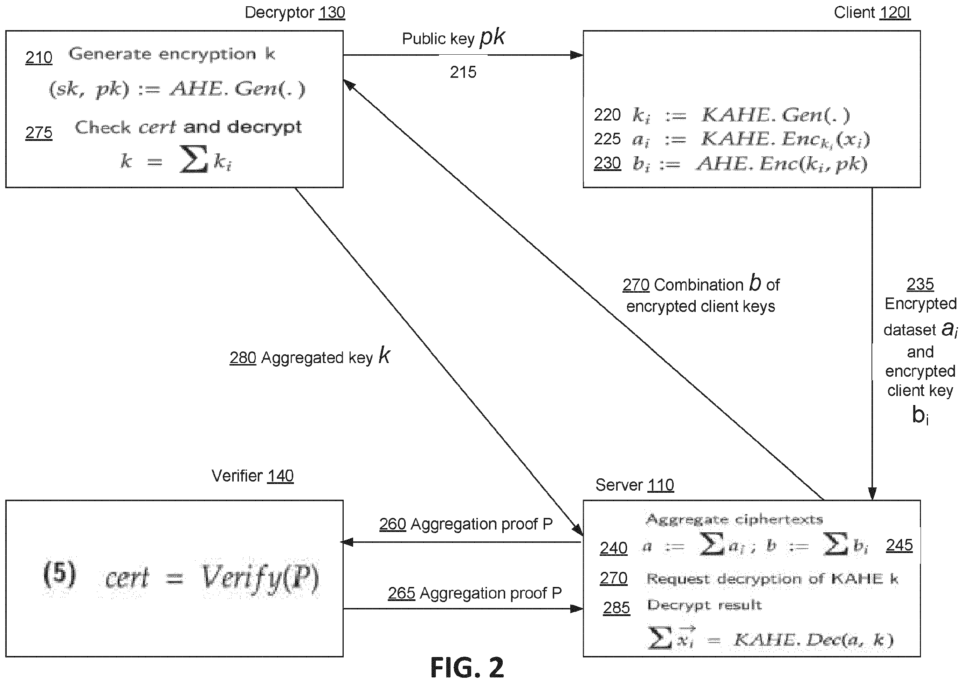

Fig. 2 schematically illustrates an example secure aggregation protocol implemented in accordance with aspects of the present disclosure. The server 110 may coordinate the aggregation process and communicate with the clients 120A-120N, which may contribute their individual datasets. The verifier 140 may ensure the integrity of the aggregated result, while the decryptor 130 may be responsible for revealing the final aggregated value without exposing individual client inputs.

In an illustrative example, the secure aggregation process may begin with a key generation operation 210, which generates a symmetric keypair that includes a public key and a corresponding secret key. The public key *pk* is then transmitted (operation 215) to each participating client 120A-120N.

In an illustrative example, upon receiving the public key *pk,* each client (e.g., client 120I) may generate (operation 220) a respective client symmetric key of the KAHE scheme. Then, the client 120I may encrypt (operation 225) its client dataset by the KAHE scheme using the generated client symmetric key. The client 120I may then encrypt (operation 230) the generated client symmetric key by the AHE scheme using the public key received from the decryptor 130. The encrypted client dataset and the encrypted client symmetric key are then transmitted (operation 235) to the server 110.

Upon receiving the encrypted client datasets and the encrypted client symmetric keys from at least a subset of participating clients, the server 110 may aggregate (operation 240) the received encrypted client datasets. The server 110 may also aggregate (operation 245) the received encrypted client symmetric keys. In some implementations, the aggregation operations may involve adding each encrypted client dataset and encrypted client symmetric key, as they are received, to the respective partial sums.

In some implementations, upon performing the aggregation, the server 110 may prove to the verifier that b in fact represents the encrypted sum of n distinct keys, all coming from different clients. The server 110 may compute the aggregation proof P reflecting the combination of the encrypted client symmetric keys. The server 110 may then transmit (operation 260) the aggregation proof P, together with the combination of the encrypted client symmetric keys, to the verifier 140. In response, the verifier 140 can, upon successful verification of the aggregation proof P, cryptographically sign a hash of the received combination of the encrypted client symmetric keys and return (operation 265) the cryptographically signed hash to the server 110.

The server 110 may then request (operation 270) the decryptor 130 to decrypt the computed combination b of the encrypted client symmetric keys. In some implementations, the server 110 may also forward to the decryptor 130 the cryptographically signed hash received from the verifier 140.

The decryptor 130 may compute the hash of the received combination b of the encrypted client symmetric keys and verify whether the computed hash matches the received hash. Upon successful verification, the decryptor 130 may decrypt (operation 275), using the secret key corresponding to the symmetric public key that was shared with the clients 120A-120N, the received combination b of the encrypted client symmetric keys. The decryptor 130 may transmit (operation 280) the resulting aggregated key *k* to the server 110.

The server 110 may utilize the received aggregated key *k* for decrypting (operation 285) the combination of encrypted client datasets, thus producing the unencrypted (cleartext) aggregated client dataset.

The above-described system architecture may allow for secure aggregation of data from multiple clients while maintaining privacy and enabling one-shot participation of the clients.

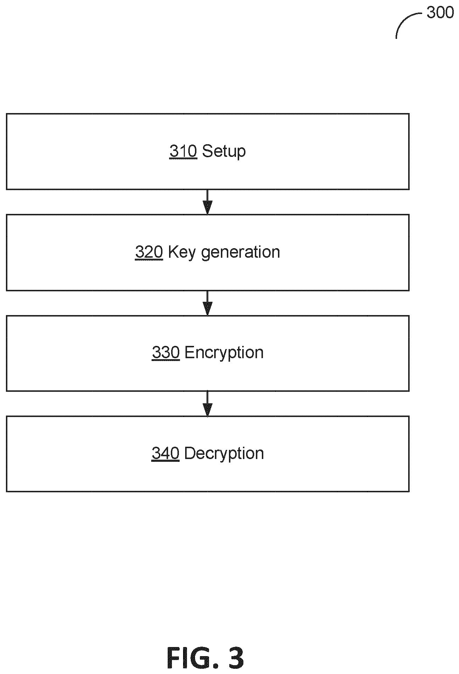

Fig. 3 schematically illustrates the KAHE scheme that may be employed by a client 120 for encrypting its client dataset. The KAHE scheme is a symmetric key encryption scheme with additive key- and message-homomorphisms: given any two ciphertexts *c₁* and *c₂* encrypting *x₁* and *x₂* under keys *k₁* and *k₂* respectively, *c₁+c₂* is a valid encryption of *x₁+x₂* under the key *k₁+k₂.* The KAHE scheme exhibits a leakage-resilient property, which guarantees that, given a number of ciphertexts encrypted under different KAHE keys, revealing the aggregate key only reveals the sum of the encrypted messages.

As schematically illustrated by Fig. 3, the KAHE scheme 300 may include the following operations: setup (operation 310), key generation (operation 320), encryption (operation 330), and decryption (operation 340).

In the following description:
*N₁* > 0 is a power of two;
${R}_{{q}_{1}} = \frac{Z \left[X\right]}{\left({q}_{1}, {X}^{{N}_{1}}+1\right)}$ for integer *q₁ >* 0;
*t₁* > 0 is an integer coprime to *q₁*;
the plaintext space for the KAHE scheme is ${R}_{{t}_{1}} = \frac{Z \left[X\right]}{\left({t}_{1}, {X}^{{N}_{1}}+1\right)}$;
For any σ > 0, *D_{σ}* is the distribution over degree-N1 polynomials such that the coefficients are independent discrete Gaussians with parameter σ; and
*σₛ, σₑ* > 0 are Gaussian parameters for the secret and error distributions.

The KAHE setup operation 310 samples and returns *a* ← *R*_{*q*1} as the public parameter of the scheme.

The KAHE key generation operation 320 generates a secret key by sampling from a Gaussian distribution over a polynomial ring: sample *k* ← *D_{σₛ}.*

The KAHE encryption operation 330 encrypts a value *x* with key *k,* returning a ciphertext c:
$c = a ⋅ k + t ⋅ e + x ,$
where e is an error term sampled from a discrete Gaussian distribution.

The KAHE decryption operation 340 decrypts a ciphertext c under the key k and returns the underlying plaintext:
$m = \left(c-a⋅k\right) mod {t}_{1}$

The key-additive property of the KAHE scheme may allow for the aggregation of encrypted data without decryption. Given two ciphertexts c₁ = (a₁, b₁) and c₂ = (a₂, b₂) encrypted under keys k₁ and k₂ respectively, the sum of the plaintexts may be obtained by computing the sum of the ciphertexts *cₛᵤₘ* = (*a*₁ + *a*₂, *b*₁ + *b*₂) and decrypting cₛᵤₘ using the sum of the keys k₁ + k₂. This property may enable a server to aggregate encrypted data from multiple clients without learning individual inputs. The server may only need the sum of the clients' secret keys to decrypt the final aggregated result.

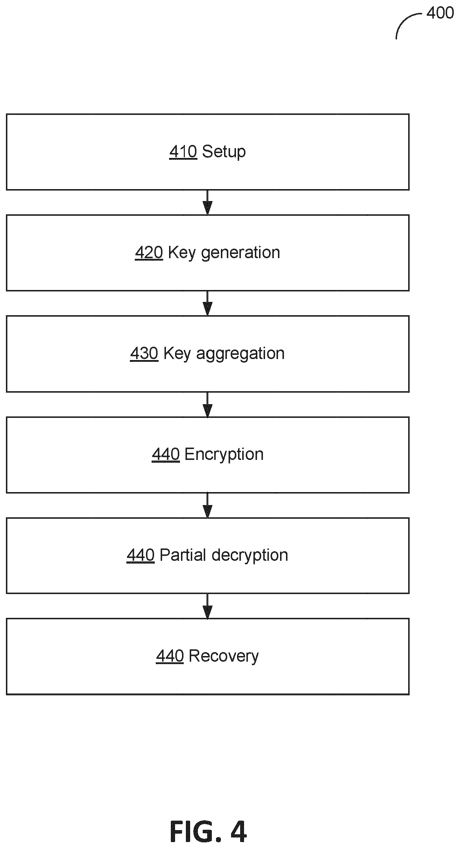

Fig. 4 schematically illustrates the AHE scheme that may be employed by a client 120 for encrypting its client key. The AHE scheme is a public key threshold additive homomorphic encryption scheme with additive distributed key generation and decryption procedures. The AHE scheme allows each party to generate independently a secret key share and the corresponding public key share *(skⱼ ; pkⱼ)* ← *KeyGen(rⱼ).* The final public key is obtained by aggregating the public key shares *pk* ← *KeyAgg{[pkⱼ}ⱼ).* Each secret key share holder may partially decrypt a ciphertext and obtain *pdⱼ* ← *PartialDec(ct; skⱼ).* The underlying plaintext may be reconstructed from all partial decryptions: *Recover(ct; (pdⱼ}ⱼ).*

The AHE scheme is additive homomorphic over plaintext: given any two ciphertexts *ct₁* and *ct₂* encrypting *m₁* and *m₂* under *pk,* the sum *ct = ct₁ + ct₂* is a valid ciphertext of *m = m₁ + m₂* under *pk.*

In some implementations, the AHE scheme may be verifiable, meaning that it has publicly verifiable public key shares, fresh ciphertexts, and partial decryptions, through zero-knowledge proof of knowledge (ZKPoK). More specifically, there exists a ZKPoK system *Π_{R}* = *(Gen; Prove; Verify)* for a relation R, where *Gen* operation generates a set of public parameters, and *Prove(x;* w) and *Verify(x)* are interactive PPT operations on statement *x* and witness w.

As schematically illustrated by Fig. 4, the AHE scheme 400 may include the following operations: setup (operation 410), key generation (operation 420), key aggregation (operation 430), encryption (operation 440), partial decryption (operation 450), and recovery (operation 460).

In the following description:
*N₂* > 0 is a power of two;
${R}_{{q}_{2}} = \frac{Z \left[X\right]}{\left({q}_{2}, {X}^{{N}_{2}}+2\right)}$ for integer modulus *q₂* > 0;
*t₂* > 0 is an integer such that the plaintext space for the AHE scheme is ${R}_{{t}_{2}} = \frac{Z \left⌊X\right⌋}{\left({t}_{2}, {X}^{{N}_{2}}+2\right)}$ ;
the scaling factor $Δ = {q}_{2} / {t}_{2}$;
*χₛ,χₑ* , and *χ_{flood}* are distributions over *R*_{*q*₂.}

The AHE setup operation 410 samples and returns u ← *R*_{*q*₂} and generates the public parameters *zkₚₐᵣₐₘₛ* of the zero knowledge (ZK) proof systems.

The AHE key generation operation 420 samples a secret key share *sk* from distribution *χₛ* using randomness *r₁* and also samples an error term *eⱼ* from distribution χₑ using randomness *r₂*. The corresponding public key share is then computed as follows: *pkⱼ* = *-u · skⱼ + e. ⱼ*

The AHE key aggregation operation 430 produces the public key *pk* based on the public key shares *pkj*: $pk = {\sum }_{j = 1}^{m} {pk}_{j}$.

The AHE encryption operation 440 encrypts a message *x* using a public key *pk* and randomness *r* , returning a ciphertext *ct.* In particular, the encryption operation 440 may involve sampling a parameter v from distribution *χₛ* using randomness *r₁* and also sampling error terms *eₒ, e₁* from distribution *χₑ* using randomness *r*₂. The ciphertext *ct* representing a message x is then computed as follows:
${ct}_{0} = pk ⋅ v + {e}_{0} + Δ ⋅ x and {ct}_{1} = pk ⋅ v + {e}_{1} .$

Although encryption operation 440 is shown in Fig. 4 to follows key aggregation operation 430, in some implementations, the order of these operations may be reversed.

The AHE partial decryption operation 450 samples a flooding noise term *e_{flood}* from distribution *X_{flood}* and computes the partial decryption *pd = ct₁ · skⱼ + e_{flood}.*

The AHE recovery operation 460 combines the partial decryptions to produce the cleartext: 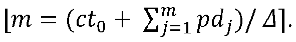 .

The AHE scheme is message-additive homomorphic: for any messages *x* and *x',* if *ct* and *ct'* are ciphertexts encrypting *x* and *x'* respectively, then *ct + ct'* encrypts *x + x'.* Furthermore, the public key of the AHE scheme is additively homomorphic: for any two pairs of key shares *(sk₁, pk₁)* and *(sk₂, pk₂ ),* the sum *pk = pk₁ + pk₂* is a public key that corresponds to the sum of secret key shares *sk₁ + sk₂.* Furthermore, if *(sk₃, pk₃)* is another pair of key shares, then *pk + pk₃* is a public key corresponding to the secret key *sk₁ + sk₂ + sk₃.* To decrypt a ciphertext *ct* encrypted under a public key *pk,* the holder of each secret key share *skⱼ* executes the AHE Partial Decryption operation to obtain the partial decryption *pdⱼ* from the pair *(ct₁, skⱼ),* and then one can recover (without knowledge of any secret key share) the underlying plaintext by invoking the AHE recovery operation on *(ct₀, {pdⱼ}ⱼ).*

As noted herein above, each client 120 encrypts its input under a KAHE key *kᵢ* that is generates. It also encrypts the KAHE key *kᵢ* itself using the public AHE key *pk* generated by the decryptor 130, together with a proof of knowledge for the encrypted *kᵢ.* The latter is necessary to prevent the server 110 from deriving correlated keys and using those to shift the aggregated KAHE key that will be decrypted by the decryptors. The server 110 aggregates the AHE ciphertexts encrypting KAHE keys and submits the resulting AHE ciphertext for decryption by the decryptor 130. It also aggregates the encrypted messages under the KAHE and uses the decrypted key that it obtained from the decryptor 130, to decrypt the aggregated clients' inputs.

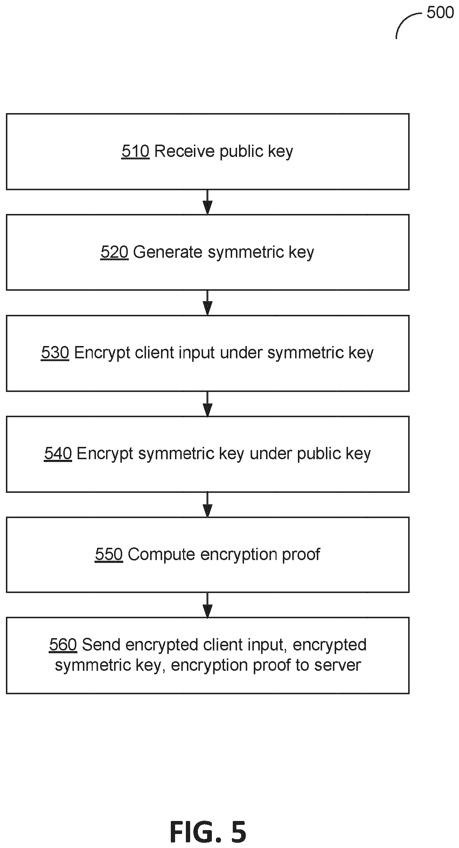

Fig. 5 is a high-level flow diagram of an example method 500 performed by a client of the secure aggregation methods in accordance with aspects of the present disclosure. The method 500 may be performed by processing logic that may include hardware (e.g., general purpose or specialized processing devices, circuitry, dedicated logic, programmable logic, microcode, integrated circuits, etc.), software (e.g., instructions run or executed on a processing device), or various combinations thereof. In some implementations, method 500 may be performed by a single processing thread. Alternatively, method 500 may be performed by two or more processing threads, each thread executing one or more individual functions, routines, subroutines, or operations of the method. In an illustrative example, the processing threads implementing method 500 may be synchronized (e.g., using semaphores, critical sections, and/or other thread synchronization mechanisms). Alternatively, the processing threads implementing method 500 may be executed asynchronously with respect to each other. In some implementations, the method 500 is performed by a client computing device (e.g., each of clients 120A-120N of Fig. 1). Operations of the method 500 may be specified by a sequence of command codes, which the processing logic may retrieve from a dedicated storage location. Although shown in a particular sequence or order, unless otherwise specified, the order of the operations may be modified. Thus, the illustrated implementations should be understood only as examples, and the illustrated operations may be performed in a different order, and some operations may be performed in parallel. Additionally, one or more operations may be omitted in various implementations. Thus, not all operations are required in every implementation.

At operation 510, the client receives the public key *pk* from the decryptor (e.g., via the server).

At operation 520, the client generates its symmetric key *kᵢ* by performing the KAHE key generation operation.

At operation 530, the client encrypts its input *xᵢ* by performing the KAHE encryption operation under the symmetric client key *kᵢ,* thus producing the symmetric key encryption *m* of the client input *xᵢ.*

At operation 540, the client encrypts its symmetric key *kᵢ* by the AHE encryption operation, thus producing the encrypted shares $\left({ct}_{i}^{0}, {ct}_{i}^{1}\right) = AHE$. *Enc(kᵢ, pk, r),* wherein r is the randomness.

At operation 550, the client computes the proof ${p}_{i} = {PROVE}_{AHE . Enc} \left(\left({ct}_{i}^{0}, {ct}_{i}^{1}\right){k}_{i},pk,⊥\right) .$

At operation 560, the client sends ( ${m}_{i} , \left({ct}_{i}^{0}, {ct}_{i}^{1}\right) , {p}_{i}$) to the server, and the method terminates.

In some implementations, at least some operations (e.g., operations 510-530) can be performed before receiving the public key *pk.* Thus, the client's online time can be very small, and in particular is independent of ℓ.

As noted herein above, the server 110 processes one-shot client contributions. Each clients that contacts the server receives a key *pk* and submits a message, without coordination with other clients. The server may 110 process client's requests in parallel and asynchronously, and therefore in arbitrary order.

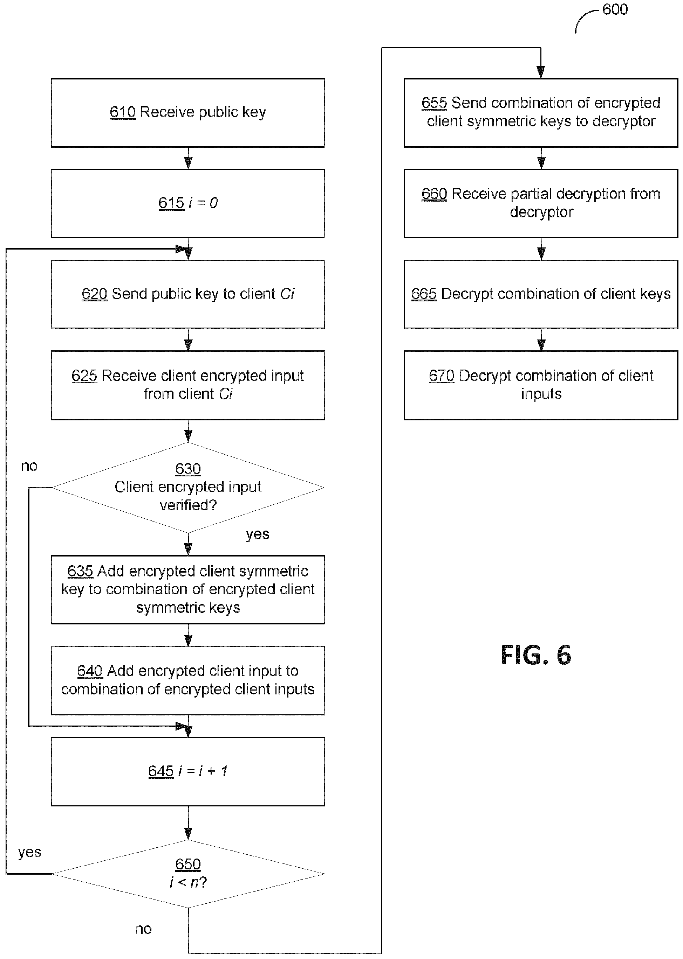

Fig. 6 is a high-level flow diagram of an example method 600 performed by the server of the secure aggregation methods in accordance with aspects of the present disclosure. The method 600 may be performed by processing logic that may include hardware (e.g., general purpose or specialized processing devices, circuitry, dedicated logic, programmable logic, microcode, integrated circuits, etc.), software (e.g., instructions run or executed on a processing device), or various combinations thereof. In some implementations, method 600 may be performed by a single processing thread. Alternatively, method 600 may be performed by two or more processing threads, each thread executing one or more individual functions, routines, subroutines, or operations of the method. In an illustrative example, the processing threads implementing method 600 may be synchronized (e.g., using semaphores, critical sections, and/or other thread synchronization mechanisms). Alternatively, the processing threads implementing method 600 may be executed asynchronously with respect to each other. In some implementations, the method 600 is performed by a server computing device (e.g., server 110 of Fig. 1). Operations of the method 600 may be specified by a sequence of command codes, which the processing logic may retrieve from a dedicated storage location. Although shown in a particular sequence or order, unless otherwise specified, the order of the operations may be modified. Thus, the illustrated implementations should be understood only as examples, and the illustrated operations may be performed in a different order, and some operations may be performed in parallel. Additionally, one or more operations may be omitted in various implementations. Thus, not all operations are required in every implementation.

At operation 610, the server receives the public key *pk* from the decryptor.

At operation 615, the server initializes the counter of clients, i, with the value of 0.

At operation 620, the server sends the public key *pk* to the i-th client *cᵢ.*

At operation 625, the server receives the client's encrypted input ( ${m}_{i} , \left({ct}_{i}^{0}, {ct}_{i}^{1}\right) , {p}_{i}$) from the i-th client *cᵢ*

Responsive to successfully verifying the client's input at operation 630, the processing continues at operation 635; otherwise, the method branches to operation 645. Verifying the client input involves performing the AHE verification operation: ${Verify}_{AHE . Enc} \left(\left({ct}_{i}^{0}, {ct}_{i}^{1}\right),{p}_{k},{p}_{i},⊥\right) .$

At operation 635, the server adds the encrypted symmetric key received from the *i-*th client to the running combination of encrypted symmetric keys: $\left({ct}^{0}, {ct}^{1}\right) + = \left({ct}_{i}^{0}, {ct}_{i}^{1}\right)$.

At operation 640, the server adds the encrypted client input *mᵢ* received from the *i-*th client to the running combination of encrypted client inputs: *m*+= *mᵢ*.

At operation 645, the server increments the counter of clients i.

Responsive to determining, at operation 650, that the counter of clients has not yet reached the number of clients (*i*<*n*)*,* the method loops back to operation 620.

At operation 650, the server sends the encrypted combination of clients' keys *ct¹* to the decryptor.

At operation 660, the server receives the partial decryption *pd* from the decryptor.

At operation 665, the server decrypts the combination of client keys k by performing the AHE decryption operation: *k = AHE. Dec(ct*⁰*, pd).*

At operation 670, the server decrypts the combination of client inputs by performing the AHE decryption operation: m *= KAHE. Dec(m, k),* and the method terminates.

As noted herein above, the decryptor 130 can be instantiated as a committee of clients, multiple servers, or a single second server. To guarantee privacy, the decryptor is not allowed to collude with the server 110. When implemented by a committee of parties, this means that a majority of decryptors 130 must remain uncorrupted (honest).

The decryptor's responsibilities may be divided into two main phases: the key generation phase and the partial decryption phase. The below description assumes that the decryptor is instantiated as a committee of m members identified by indices in [m], with secure authenticated channels among themselves, and a coordinator. In some implementations, the functions of the coordinator may be performed by the server 110; and the name "coordinator" is used in the below description to emphasize that those functions are part of the decryptor functionality.

In the key generation phase, each decryptor may generate key shares and associated proofs. This process may involve sampling a secret key share from a specified distribution and computing a corresponding public key share. The decryptor may also generate a zero-knowledge proof to demonstrate knowledge of the secret key share without revealing it.

In particular, each decryptor j ∈ D may generate a corresponding pair of secret key and public key shares using the AHE key generation operation: *(skⱼ, pkⱼ)* ← *AHE.KeyGen(rⱼ).*

Each decryptor may further generate *secret-shares {share^{j}ₖ}ₖ* ← *Share(rⱼ, t)* within D with threshold *t.*

The decryptor then sends (*pkⱼ, πⱼ = PROOVE_{AHE.KeyGen}*(*pkⱼ, rⱼ*) to the coordinator.

The coordinator collects the messages up to the timeout T. Assuming that C is the set of decryptors with correct proofs *πⱼ*, the coordinator aborts if |C| < t; otherwise, the coordinator sets *D:=C* and *pk* := *Σ*_{*j*∈}*_{D} pkⱼ.*

In the partial decryption phase, each decryptor may produce a partial decryption of the ciphertext. The partial decryption phase may involve two rounds of decryption.

In the first round, the coordinator sends ciphertext *ct¹* to decryptors in D.

Each decryptor secret-shares a key *k_{sym,j}* for a symmetric encryption scheme *Sym* within D with threshold *t.* Each decryptor then sends *pdⱼ = Sym, Enc (mⱼ, k_{sym,j}*) where *mⱼ* = (*pdⱼ* = *AHE. PartialDec(c*¹*, skⱼ*)*, τⱼ = PROOVE_{AHE.PartialDec}*(*pdⱼ, skⱼ*) to the coordinator.

The coordinator collects the messages up to the timeout T. Assuming that P is the set of decryptors that submitted messages *pdⱼ*, the coordinator aborts if |P| < t.

In the second round, the coordinator sends P to decryptors in P.

Each decryptor from P sends shares ${\left\{{share}_{j}^{k}\right\}}_{k ∈ D \ P}$ from all decryptors *k* not in P, i.e., dropouts, to the coordinator. Each decryptor from P then sends the key shares received in the first round from every decryptor in P to the coordinator.

The coordinator reconstructs *(rₖ, pkₖ, skₖ, pdₖ)* of every dropout decryptor k ∈ *D\P.* If a reconstructed *pkₖ* does not match the one received in the key generation phase, the coordinator aborts. Otherwise, the coordinator recovers *mₖ* for every non-dropout *k* ∈ *P.* If there is a partial decryption with an invalid proof, the coordinator aborts. Otherwise, the coordinator sends pd = *∑_{j∈D} pdⱼ* to the server 110.

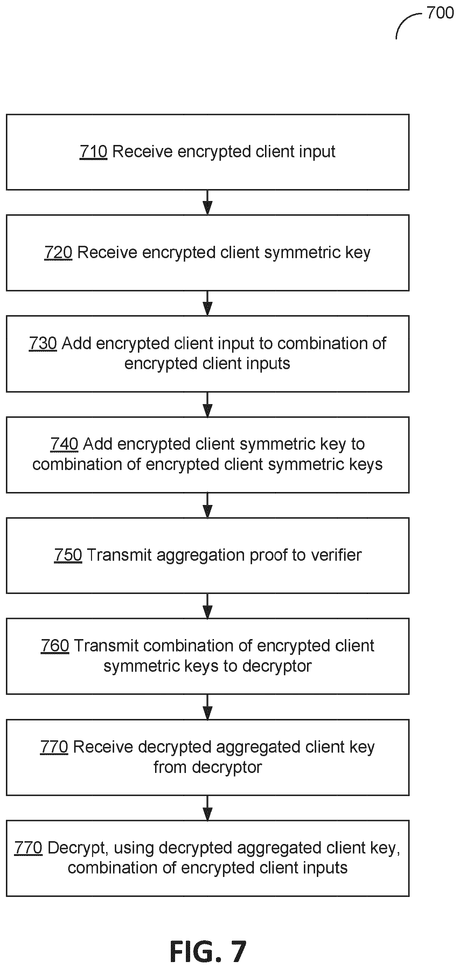

Fig. 7 is a high-level flow diagram of another example method 700 performed by the server of the secure aggregation methods in accordance with aspects of the present disclosure. The method 700 may be performed by processing logic that may include hardware (e.g., general purpose or specialized processing devices, circuitry, dedicated logic, programmable logic, microcode, integrated circuits, etc.), software (e.g., instructions run or executed on a processing device), or various combinations thereof. In some implementations, method 700 may be performed by a single processing thread. Alternatively, method 700 may be performed by two or more processing threads, each thread executing one or more individual functions, routines, subroutines, or operations of the method. In an illustrative example, the processing threads implementing method 700 may be synchronized (e.g., using semaphores, critical sections, and/or other thread synchronization mechanisms). Alternatively, the processing threads implementing method 700 may be executed asynchronously with respect to each other. In some implementations, the method 700 is performed by a server computing device (e.g., server 110 of Fig. 1). Operations of the method 700 may be specified by a sequence of command codes, which the processing logic may retrieve from a dedicated storage location. Although shown in a particular sequence or order, unless otherwise specified, the order of the operations may be modified. Thus, the illustrated implementations should be understood only as examples, and the illustrated operations may be performed in a different order, and some operations may be performed in parallel. Additionally, one or more operations may be omitted in various implementations. Thus, not all operations are required in every implementation.

At operation 710, the server receives, from a client of a set of clients implementing the secure aggregation method, an encrypted client input represented by a client input encrypted with a client symmetric key. In some implementations, the encrypted client input is produced by the client encrypting the client input by a key-additive homomorphic encryption (KAHE) scheme with the client symmetric key.

At operation 720, the server receives, from the client, an encrypted client symmetric key represented by the client symmetric key encrypted with a public key received by the client from a decryptor. In some implementations, the encrypted client symmetric key is produced by the client encrypting the client symmetric key by an additive homomorphic encryption (AHE) scheme with the public key.

At operation 730, the server combines the encrypted client input with a combination of encrypted client inputs received from at least a subset of the set of clients.

At operation 740, the server combines the encrypted client symmetric key with a combination of encrypted client symmetric keys received from at least the subset of the set of clients.

At operation 750, the server transmits, to a verifier, an aggregation proof demonstrating that each encrypted client input is included at most once in the combination of encrypted client inputs.

At operation 760, the server transmits, to the decryptor, the combination of encrypted client symmetric keys.

At operation 770, the server receives, from the decryptor, a decrypted aggregated key produced by decrypting, using a secret key corresponding to the public key, the combination of encrypted client symmetric keys.

In some implementations, the decryptor is implemented by a subset of the plurality of clients. Alternatively, the decryptor is implemented by one or more dedicated computing devices. In some implementations, a respective portion of the decrypted aggregated key is received from each decryptor of at least threshold number of decryptors of a distributed set of decryptors implementing the secure aggregation method. The server may then combine the portions of the decrypted aggregated key to obtain the decrypted aggregated key.

At operation 780, the server decrypts, using the decrypted aggregated key, the combination of encrypted client inputs to obtain an aggregated representation of the client inputs, and the method terminates.

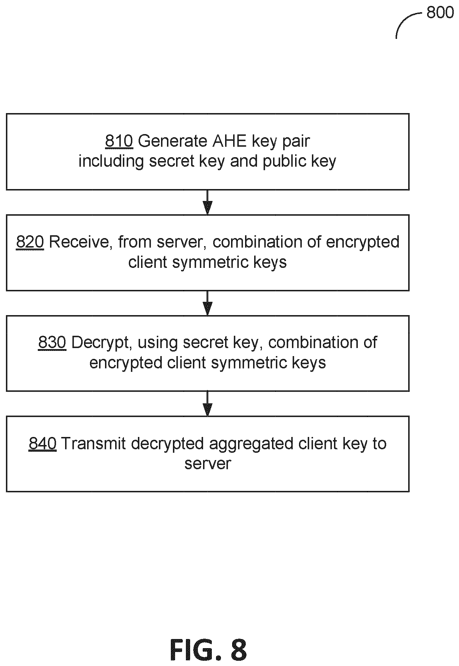

Fig. 8 is a high-level flow diagram of an example method 800 performed by the decryptor of the secure aggregation methods in accordance with aspects of the present disclosure. The method 800 may be performed by processing logic that may include hardware (e.g., general purpose or specialized processing devices, circuitry, dedicated logic, programmable logic, microcode, integrated circuits, etc.), software (e.g., instructions run or executed on a processing device), or various combinations thereof. In some implementations, method 800 may be performed by a single processing thread. Alternatively, method 800 may be performed by two or more processing threads, each thread executing one or more individual functions, routines, subroutines, or operations of the method. In an illustrative example, the processing threads implementing method 800 may be synchronized (e.g., using semaphores, critical sections, and/or other thread synchronization mechanisms). Alternatively, the processing threads implementing method 800 may be executed asynchronously with respect to each other. In some implementations, the method 800 is performed by a decryptor computing device (e.g., decryptor 130 of Fig. 1). At least some of the operations of method 800 may be performed by the server computing device (e.g., server 110 of Fig. 1). Operations of the method 800 may be specified by a sequence of command codes, which the processing logic may retrieve from a dedicated storage location. Although shown in a particular sequence or order, unless otherwise specified, the order of the operations may be modified. Thus, the illustrated implementations should be understood only as examples, and the illustrated operations may be performed in a different order, and some operations may be performed in parallel. Additionally, one or more operations may be omitted in various implementations. Thus, not all operations are required in every implementation.

At operation 810, the decryptor generates an AHE key pair including a secret key and a public key, as described in more detail herein above.

At operation 820, the decryptor receives, from the server, a combination of encrypted client symmetric keys, as described in more detail herein above.

At operation 830, the decryptor produces the decrypted key by decrypting, using the secret key, the combination of encrypted client symmetric keys, as described in more detail herein above.

At operation 840, the decryptor transmits the decrypted key to the server, and the method terminates.

As noted herein above, in the implementations of the secure aggregation protocol that is secure against an actively corrupted server, the verifier 140 may ensure the integrity of the aggregated result. The verifier 140 does not hold any state, and its purpose is to verify a public data structure representing the aggregated client inputs, which is generated by the server 110. The verifier 140 may be implemented by a designated party (as shown in Fig. 1), by a committee (e.g., at least a subset) of clients, or by a trusted execution environment (e.g., via remote attestation, as confidentiality is not a concern here). Similar to the decryptor 130, the verifier 140 is not allowed to collude with the server 110. Thus, the verifier 140 may be implemented by the same one or more components of the distributed system 100 that implement the decryptor.

The role of the verifier is to ensure that an actively corrupted server would not be able to send for decryption a subset of the client's inputs, instead of the total sum. Moreover, the verifier prevents a malicious server to "copy/replay" contributions from honest clients. Thus, the verifier's function is to check the Zero-Knowledge Proof of Knowledge (ZKPoK) associated with the encrypted combination of client symmetric keys. Moreover, the verifier checks that the encrypted combination of client symmetric keys is indeed the result of aggregating the individual encrypted client symmetric keys. This can be done by using a tree data structure T, akin to a Merkle tree. Each leaf of the (binary) tree contains a (constant-size) commitment to the encrypted client symmetric keys and the corresponding ZK proof. Internal nodes contain commitments such that the commitment in a parent node commits to the sum of the committed value of its children. Therefore, the root of a valid tree commits to encrypted client symmetric keys. Importantly, ciphertexts bi (which can each be hundreds of kilobytes in size) do not need to be part of the data structure T. Just like Merkle trees, the data structure T is amenable to distributed verification: there are two ways to distribute the verifier's role among multiple parties. The first one is based on committees and is fully secure (gives a cheating server negligible advantage). The second one is fully distributed (no need to form committees) and catches a cheating server with tunable constant probability, e.g., 90%. This is appropriate for settings where the server faces some reputation loss risk when caught cheating. Furthermore, the data structure T does not contain private information and thus can be made public for anyone to verify.

The verifier can be implemented in several ways: it could be a designated party, the set of clients themselves, a committee of clients, or a Trusted Execution Environment (via remote attestation, as confidentiality is not concern here). The only assumption for this role is non-collusion with the server, and therefore it can also be taken by the same party(s) implementing the decryptor. Two variants of a distributed verifier are described herein below, one with overwhelming deterrence for a cheating server, and another with constant (tunnable) deterrence. "Deterrence" here refers to the probability of a cheating server being caught. A pool of c clients, among which *γ_{d}* ≥ 1/2 are trusted to not collude with an adversary corrupting the server, are available to serve as a verifier.

Verifier via committee may be implemented by grouping clients from c in *c*/*k* committees of size *k = O*(*σ + log(c*/*k)),* ensuring that each committee contains at least a threshold *t* of honest clients except with negligible probability *2^{-σ}* , for statistical security σ. A randomness beacon could be used to make sure these committees are selected uniformly at random, and for the interval assignment that follows. Then, the leaves of the tree-like data structure *T*(*S~*) are split into *c*/*k* contiguous intervals and each committee signs the root tree after verifying their interval. The decryptor requires at least t signatures from every subtree/interval to decrypt. Each committee includes enough honest parties to verify valid intervals, but not enough corrupted parties to verify an invalid interval. Moreover, by choosing a large enough threshold *t*, robustness to a fraction of verifiers dropping out can be achieved.

Verifier via random checks may be implemented in situations where a constant deterrence is enough, e.g., because the risk of reputational loss for the server is high, the *γ_{d}^{c}* honest clients can be relied upon for checking random intervals of leaves. In particular, consider a verifier that selects, independently at random, s intervals of length w to be checked. If the server cheats at a given leaf, the probability of a particular check catching the lie is *w*/*n*. Therefore, the probability of the server cheating and getting away with it is $p = {\left(1-\frac{w}{n}\right)}^{s} \leq {e}^{- ws / n}$ .

By having each verifier check *s*/*(γ_{d}^{c})* random intervals, the honest majority assumption ensures a cheating server will get caught with probability *∈* = 1 - p.

As noted herein above, applications of the secure aggregation systems and methods described herein include, e.g., federated analytics and federated learning applications.

Federated analytics generally refers to analyzing data that is distributed across multiple locations without moving the data to a central server. This approach allows entities (clients) to gain insights from their data while preserving data privacy. In various implementations of the federated analytics approach, each dataset remains on the local device (client) where it was originated. Analytics and computations are performed locally on each dataset by the respective client. Only the aggregated results, and not the original datasets, are shared with a central server. Such an approach reduces the need to transfer large datasets, minimizing security risks and compliance issues.

Federated analytics applications are expected to handle very large volumes of data items which may be collected over a long period of time, e.g. a week.

The federated analytics approach enables collaboration between different entities without sharing their sensitive data. Federated analytics may be particularly useful in healthcare, finance, or telecommunications where data privacy is critical.

Federated learning generally refers to machine learning techniques where multiple devices (clients) collaborate to train a model while keeping their respective datasets private. Instead of sending the whole dataset to a central server, each client trains a model locally on its own dataset and then shares only the model updates (such as gradients or weights) with the server. The central server aggregates these updates to improve the global model.

The federated learning model preserves the privacy of the dataset on each client, since only model updates are shared with the server. Furthermore, as only model updates are transmitted, the amount of data sent over the network is significantly reduced compared to sending raw data. Besides, training models locally may reduce the time needed to send large datasets to a central server. Additionally, federated learning may leverage the computational power of many distributed devices, potentially enabling the training of larger and more complex models.

Federated learning may be particularly useful in scenarios where data is generated on mobile or Internet of Things (IoT) devices, such as smartphones or sensors. Besides, federated learning may be particularly useful in healthcare applications allowing sensitive medical data to be used to train models while preserving patient privacy. Likewise, financial institutions may use federated learning to improve fraud detection and credit scoring without sharing customer data.

In the federated learning scenarios, the input length ℓ corresponds to size of the model update, and the required sum size n may be expected to be in the thousands.

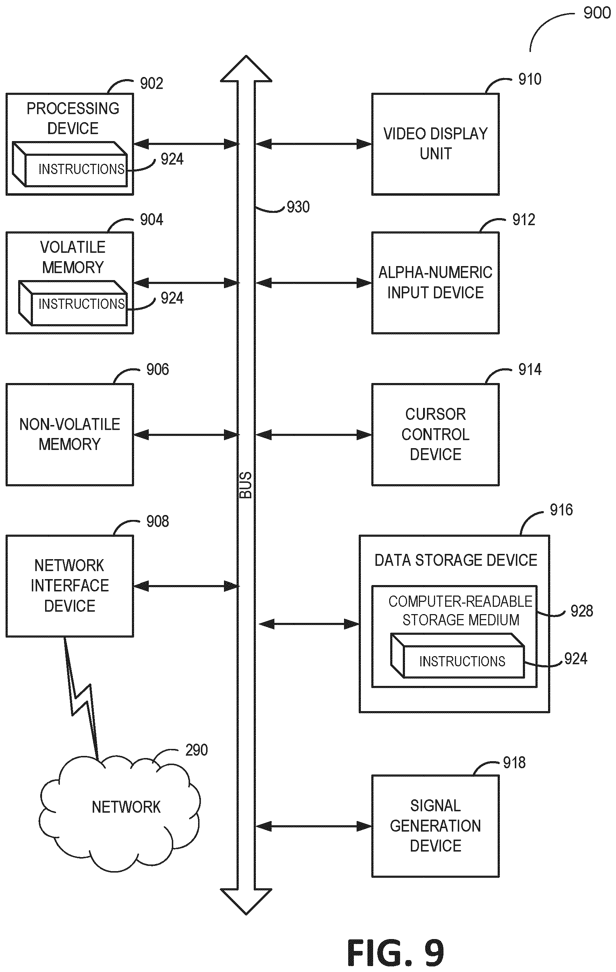

Fig. 9 is a block diagram illustrating an exemplary computer system 900, in accordance with implementations of the present disclosure. The computer system 900 may implement the server 110, the clients 120A-120Q, the decryptor 130, and/or the verifier 140 of Fig. 1. Computer system 900 may operate in the capacity of a server or an endpoint machine in an endpoint-server network environment, or as a peer machine in a peer-to-peer (or distributed) network environment. The machine may be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 900 includes a processing device (processor) 902, a volatile memory 904 (e.g., read-only memory (ROM), flash memory, dynamic random access memory (DRAM) such as synchronous DRAM (SDRAM), double data rate (DDR SDRAM), or DRAM (RDRAM), etc.), a non-volatile memory 906 (e.g., flash memory, static random access memory (SRAM), etc.), and a data storage device 916, which communicate with each other via a bus 930.

Processing device 902 represents one or more general-purpose processing devices such as a microprocessor, central processing unit, or the like. More particularly, the processing device 202 may be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 902 may also be one or more special-purpose processing devices such as an application specific integrated circuit (ASIC), a field programmable gate array (FPGA), a digital signal processor (DSP), network processor, or the like. The processing device 902 is configured to execute instructions 924 (e.g., implementing the methods 500, 600, 700, and/or 800) for performing the operations discussed herein.

The computer system 900 may further include a network interface device 908. The computer system 900 also may include a video display unit 910 (e.g., a liquid crystal display (LCD) or a cathode ray tube (CRT)), an input device 912 (e.g., a keyboard, and alphanumeric keyboard, a motion sensing input device, touch screen), a cursor control device 914 (e.g., a mouse), and a signal generation device 918 (e.g., a speaker).

The data storage device 916 may include a non-transitory machine-readable storage medium 928 (also computer-readable storage medium) on which is stored one or more sets of instructions 924 (e.g., implementing the methods 500, 600, 700, and/or 800) embodying any one or more of the methodologies or functions described herein. The instructions may also reside, completely or at least partially, within the volatile memory 904 and/or within the processing device 902 during execution thereof by the computer system 900, the volatile memory 904 and the processing device 902 also constituting machine-readable storage media. The instructions may further be transmitted or received over a network 920 via the network interface device 908.

In one implementation, the instructions 924 include instructions for providing fine-grained version histories of electronic documents at a platform. While the computer-readable storage medium 928 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," "one implementation," "an implementation," or "an implementation," means that a particular feature, structure, or characteristic described in connection with the implementation and/or implementation is included in at least one implementation and/or implementation. Thus, the appearances of the phrase "in one implementation," or "in an implementation," in various places throughout this specification can, but are not necessarily, referring to the same implementation, depending on the circumstances. Furthermore, the particular features, structures, or characteristics may be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller and the controller may be a component. One or more components may reside within a process and/or thread of execution and a component may be localized on one computer and/or distributed between two or more computers. Further, a "device" may come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It may be appreciated that such systems, circuits, components, blocks, and so forth may include those components or specified sub-components, some of the specified components or sub-components, and/or additional components, and according to various permutations and combinations of the foregoing. Sub-components may also be implemented as components communicatively coupled to other components rather than included within parent components (hierarchical). Additionally, it should be noted that one or more components may be combined into a single component providing aggregate functionality or divided into several separate sub-components, and any one or more middle layers, such as a management layer, may be provided to communicatively couple to such sub-components in order to provide integrated functionality. Any components described may also interact with one or more other components not specifically described but known by those of skill in the art.

Moreover, the words "example" or "exemplary" are used to mean serving as an example, instance, or illustration. Any aspect or design described as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described include collection of data describing a user and/or activities of a user. In one implementation, such data is only collected upon the user providing consent to the collection of this data. In some implementations, a user is prompted to explicitly allow data collection. Further, the user may opt-in or opt-out of participating in such data collection activities. In one implementation, the collected data is anonymized prior to performing any analysis to obtain any statistical patterns so that the identity of the user cannot be determined from the collected data.

## Claims

1. A method, comprising:
receiving, by a server, from a client of a plurality of clients, an encrypted client input represented by a client input encrypted with a client symmetric key (625, 710);
receiving, from the client, an encrypted client symmetric key represented by the client symmetric key encrypted with a public key received by the client from a decryptor (625, 720);
combining the encrypted client input with a combination of encrypted client inputs received from at least a subset of the plurality of clients (240, 640, 730);
combining the encrypted client symmetric key with a combination of encrypted client symmetric keys received from at least the subset of the plurality of clients (245, 635, 740);
transmitting, to the decryptor, the combination of encrypted client symmetric keys (270, 650, 760);
receiving, from the decryptor, a decrypted aggregated key produced by decrypting, using a secret key corresponding to the public key, the combination of encrypted client symmetric keys (280, 770); and
decrypting, using the decrypted aggregated key, the combination of encrypted client inputs to obtain an aggregated representation of a plurality of client inputs (285, 670, 780).

2. The method of claim 1, wherein the encrypted client input is produced by encrypting the client input by a key-additive homomorphic encryption (KAHE) scheme with the client symmetric key (225, 530, 710).

3. The method of claim 1 or claim 2, wherein the encrypted client symmetric key is produced by encrypting the client symmetric key by an additive homomorphic encryption (AHE) scheme with the public key (230, 540, 720).

4. The method of any preceding claim, further comprising:
generating an aggregation proof demonstrating that each encrypted client input is included at most once in the combination of encrypted client inputs (250, 260, 750); and
sending the aggregation proof to a verifier for validation (260).

5. The method of any preceding claim, wherein receiving the decrypted aggregated key further comprises:
receiving a respective portion of the decrypted aggregated key from each decryptor of at least threshold number of decryptors of a distributed set of decryptors (660); and
combining the portions of the decrypted aggregated key to obtain the decrypted aggregated key (665).

6. The method of any preceding claim, wherein the decryptor is implemented by a subset of the plurality of clients (130, 100, 8029).

7. The method of any of claims 1 to 5, wherein the decryptor is implemented by one or more dedicated computing devices (130).

8. A system comprising:
a memory (904, 906); and
a processing device coupled to the memory (902), the processing device to perform operations comprising:
receiving, from a client of a plurality of clients, an encrypted client input represented by a client input encrypted with a client symmetric key (120I, 235, 710);
receiving, from the client, an encrypted client symmetric key represented by the client symmetric key encrypted with a public key received by the client from a decryptor (120I, 235, 720);
combining the encrypted client input with a combination of encrypted client inputs received from at least a subset of the plurality of clients (240, 640, 730);
combining the encrypted client symmetric key with a combination of encrypted client symmetric keys received from at least the subset of the plurality of clients (245, 635, 740);
transmitting, to the decryptor, the combination of encrypted client symmetric keys (270, 650, 760);
receiving, from the decryptor, a decrypted aggregated key produced by decrypting, using a secret key corresponding to the public key, the combination of encrypted client symmetric keys (280, 770); and
decrypting, using the decrypted aggregated key, the combination of encrypted client inputs to obtain an aggregated representation of a plurality of client inputs (285, 670, 780).

9. The system of claim 8, wherein the encrypted client input is produced by encrypting the client input by a key-additive homomorphic encryption (KAHE) scheme with the client symmetric key (225, 530, 710).

10. The system of claim 8 or claim 9, wherein the encrypted client symmetric key is produced by encrypting the client symmetric key by an additive homomorphic encryption (AHE) scheme with the public key (230, 540, 720).

11. The system of any of claims 8 to 10, wherein the operations further comprise:
generating an aggregation proof demonstrating that each encrypted client input is included at most once in the combination of encrypted client inputs (250, 260, 750); and
sending the aggregation proof to a verifier for validation (260).

12. The system of any of claims 8 to 11, wherein receiving the decrypted aggregated key further comprises:
receiving a respective portion of the decrypted aggregated key from each decryptor of at least threshold number of decryptors of a distributed set of decryptors (660); and
combining the portions of the decrypted aggregated key to obtain the decrypted aggregated key (665).

13. The system of any of claims 8 to 12, further comprising
a second memory (904, 906); and
a second processing device coupled to the memory (902), the second processing device to perform operations of the client, the operations comprising: receiving, from the decryptor, a public key (215, 510);
generating the client symmetric key by a Key-Additive Homomorphic Encryption (KAHE) scheme (220, 520);
producing the encrypted client input by encrypting the client input by the KAHE scheme using the client symmetric key (225, 530); and
producing the encrypted client symmetric key by encrypting the client symmetric key by an Additive Homomorphic Encryption (AHE) scheme using the public key (230, 540).

14. The system of any of claims 8 to 13, further comprising
a second memory (904, 906); and
a second processing device coupled to the memory (902), the second processing device to perform operations of the decryptor, the operations comprising:
generating an AHE key pair comprising the secret key and the public key (210, 810);
receiving, from the server, the combination of encrypted client symmetric keys (270, 820);
producing the decrypted key by decrypting, using the secret key, the combination of encrypted client symmetric keys (275, 830); and
transmitting the decrypted key to the server (280, 840).

15. Computer program instructions, optionally stored on a non-transitory computer-readable storage medium (928), that, when executed by a processing device of a server (902), cause the processing device to perform the method of any of claims 1 to 7.

## Patentansprüche

1. Verfahren, umfassend:
Empfangen, durch einen Server, von einem Client einer Mehrzahl von Clients, einer verschlüsselten Client-Eingabe, die durch eine Client-Eingabe dargestellt wird, die mit einem symmetrischen Client-Schlüssel verschlüsselt ist (625, 710);
Empfangen, von dem Client, eines verschlüsselten symmetrischen Client-Schlüssels, der durch den symmetrischen Client-Schlüssel dargestellt wird, der mit einem öffentlichen Schlüssel verschlüsselt ist, den der Client von einem Entschlüssler empfangen hat (625, 720);
Kombinieren der verschlüsselten Client-Eingabe mit einer Kombination verschlüsselter Client-Eingaben, die aus mindestens einer Teilmenge der Mehrzahl von Clients empfangen wurden (240, 640, 730);
Kombinieren des verschlüsselten symmetrischen Client-Schlüssels mit einer Kombination verschlüsselter symmetrischer Client-Schlüssel, die aus mindestens der Teilmenge der Mehrzahl von Clients empfangen wurden (245, 635, 740);
Übertragen, an den Entschlüssler, der Kombination verschlüsselter symmetrischer Client-Schlüssel (270, 650, 760);
Empfangen, von dem Entschlüssler, eines entschlüsselten aggregierten Schlüssels, der durch Entschlüsseln, unter Verwendung eines dem öffentlichen Schlüssel entsprechenden geheimen Schlüssels, der Kombination verschlüsselter symmetrischer Client-Schlüssel erstellt wird (280, 770); und
Entschlüsseln, unter Verwendung des entschlüsselten aggregierten Schlüssels, der Kombination verschlüsselter Client-Eingaben, um eine aggregierte Darstellung einer Mehrzahl von Client-Eingaben zu erhalten (285, 670, 780).

2. Verfahren nach Anspruch 1, wobei die verschlüsselte Client-Eingabe durch Verschlüsseln der Client-Eingabe mittels eines schlüsseladditiven homomorphen Verschlüsselungs(KAHE)-Schemas mit dem symmetrischen Client-Schlüssel erstellt wird (225, 530, 710).

3. Verfahren nach Anspruch 1 oder Anspruch 2, wobei der verschlüsselte symmetrische Client-Schlüssel durch Verschlüsseln des symmetrischen Client-Schlüssels mittels eines additiven homomorphen Verschlüsselungs(AHE)-Schemas mit dem öffentlichen Schlüssel erstellt wird (230, 540, 720).

4. Verfahren nach einem der vorhergehenden Ansprüche, ferner umfassend:
Erzeugen eines Aggregationsbeweises, der nachweist, dass jede verschlüsselte Client-Eingabe höchstens einmal in der Kombination verschlüsselter Client-Eingaben eingeschlossen ist (250, 260, 750); und
Senden des Aggregationsbeweises an einen Verifizierer zur Validierung (260).

5. Verfahren nach einem der vorhergehenden Ansprüche, wobei Empfangen des entschlüsselten aggregierten Schlüssels ferner Folgendes umfasst:
Empfangen eines jeweiligen Anteils des entschlüsselten aggregierten Schlüssels von jedem Entschlüssler aus mindestens einer Schwellenanzahl von Entschlüsslern eines verteilten Satzes von Entschlüsslern (660); und
Kombinieren der Anteile des entschlüsselten aggregierten Schlüssels, um den entschlüsselten aggregierten Schlüssel zu erhalten (665).

6. Verfahren nach einem der vorhergehenden Ansprüche, wobei der Entschlüssler durch eine Teilmenge der Mehrzahl von Clients implementiert ist (130, 100, 8029).

7. Verfahren nach einem der Ansprüche 1-5, wobei der Entschlüssler durch eine oder mehrere dedizierte Rechenvorrichtungen implementiert ist (130).

8. System, umfassend:
einen Speicher (904, 906); und
eine mit dem Speicher gekoppelte Verarbeitungsvorrichtung (902), wobei die Verarbeitungsvorrichtung dazu dient, Folgendes umfassende Vorgänge durchzuführen:
Empfangen, von einem Client einer Mehrzahl von Clients, einer verschlüsselten Client-Eingabe, die durch eine Client-Eingabe dargestellt wird, die mit einem symmetrischen Client-Schlüssel verschlüsselt ist (120I, 235, 710);
Empfangen, von dem Client, eines verschlüsselten symmetrischen Client-Schlüssels, der durch den symmetrischen Client-Schlüssel dargestellt wird, der mit einem öffentlichen Schlüssel verschlüsselt ist, den der Client von einem Entschlüssler empfangen hat (120I, 235, 720);
Kombinieren der verschlüsselten Client-Eingabe mit einer Kombination verschlüsselter Client-Eingaben, die aus mindestens einer Teilmenge der Mehrzahl von Clients empfangen wurden (240, 640, 730);
Kombinieren des verschlüsselten symmetrischen Client-Schlüssels mit einer Kombination verschlüsselter symmetrischer Client-Schlüssel, die aus mindestens der Teilmenge der Mehrzahl von Clients empfangen wurden (245, 635, 740);
Übertragen, an den Entschlüssler, der Kombination verschlüsselter symmetrischer Client-Schlüssel (270, 650, 760);
Empfangen, von dem Entschlüssler, eines entschlüsselten aggregierten Schlüssels, der durch Entschlüsseln, unter Verwendung eines dem öffentlichen Schlüssel entsprechenden geheimen Schlüssels, der Kombination verschlüsselter symmetrischer Client-Schlüssel erstellt wird (280, 770); und
Entschlüsseln, unter Verwendung des entschlüsselten aggregierten Schlüssels, der Kombination verschlüsselter Client-Eingaben, um eine aggregierte Darstellung einer Mehrzahl von Client-Eingaben zu erhalten (285, 670, 780).

9. System nach Anspruch 8, wobei die verschlüsselte Client-Eingabe durch Verschlüsseln der Client-Eingabe mittels eines schlüsseladditiven homomorphen Verschlüsselungs(KAHE)-Schemas mit dem symmetrischen Client-Schlüssel erstellt wird (225, 530, 710).

10. System nach Anspruch 8 oder Anspruch 9, wobei der verschlüsselte symmetrische Client-Schlüssel durch Verschlüsseln des symmetrischen Client-Schlüssels mittels eines additiven homomorphen Verschlüsselungs(AHE)-Schemas mit dem öffentlichen Schlüssel erstellt wird (230, 540, 720).

11. System nach einem der Ansprüche 8-10, wobei die Vorgänge ferner Folgendes umfassen:
Erzeugen eines Aggregationsbeweises, der nachweist, dass jede verschlüsselte Client-Eingabe höchstens einmal in der Kombination verschlüsselter Client-Eingaben eingeschlossen ist (250, 260, 750); und
Senden des Aggregationsbeweises an einen Verifizierer zur Validierung (260).

12. System nach einem der Ansprüche 8-11, wobei Empfangen des entschlüsselten aggregierten Schlüssels ferner Folgendes umfasst:
Empfangen eines jeweiligen Anteils des entschlüsselten aggregierten Schlüssels von jedem Entschlüssler aus mindestens einer Schwellenanzahl von Entschlüsslern eines verteilten Satzes von Entschlüsslern (660); und
Kombinieren der Anteile des entschlüsselten aggregierten Schlüssels, um den entschlüsselten aggregierten Schlüssel zu erhalten (665).

13. System nach einem der Ansprüche 8-12, ferner umfassend einen zweiten Speicher (904, 906); und
eine mit dem Speicher gekoppelte zweite Verarbeitungsvorrichtung (902), wobei die zweite Verarbeitungsvorrichtung dazu dient, Vorgänge des Clients durchzuführen, wobei die Vorgänge Folgendes umfassen:
Empfangen, von dem Entschlüssler, eines öffentlichen Schlüssels (215, 510);
Erzeugen des symmetrischen Client-Schlüssels mittels eines schlüsseladditiven homomorphen Verschlüsselungs(KAHE)-Schemas (220, 520);
Erstellen der verschlüsselten Client-Eingabe durch Verschlüsseln der Client-Eingabe mittels des KAHE-Schemas unter Verwendung des symmetrischen Client-Schlüssels (225, 530); und
Erstellen des verschlüsselten symmetrischen Client-Schlüssels durch Verschlüsseln des symmetrischen Client-Schlüssels mittels eines additiven homomorphen Verschlüsselungs(AHE)-Schemas unter Verwendung des öffentlichen Schlüssels (230, 540).

14. System nach einem der Ansprüche 8-13, ferner umfassend einen zweiten Speicher (904, 906); und
eine mit dem Speicher gekoppelte zweite Verarbeitungsvorrichtung (902), wobei die zweite Verarbeitungsvorrichtung dazu dient, Vorgänge des Entschlüsslers durchzuführen, wobei die Vorgänge Folgendes umfassen:
Erzeugen eines AHE-Schlüsselpaars, umfassend den geheimen Schlüssel und den öffentlichen Schlüssel (210, 810);
Empfangen, von dem Server, der Kombination verschlüsselter symmetrischer Client-Schlüssel (270, 820);
Erstellen des entschlüsselten Schlüssels durch Entschlüsseln, unter Verwendung des geheimen Schlüssels, der Kombination verschlüsselter symmetrischer Client-Schlüssel (275, 830); und
Übertragen des entschlüsselten Schlüssels an den Server (280, 840).

15. Computerprogrammanweisungen, die optional auf einem nichtflüchtigen computerlesbaren Speichermedium (928) gespeichert sind und die, wenn sie durch eine Verarbeitungsvorrichtung eines Servers (902) ausgeführt werden, die Verarbeitungsvorrichtung veranlassen, das Verfahren nach einem der Ansprüche 1-7 durchzuführen.

## Revendications

1. Procédé, comprenant :
la réception, par un serveur, à partir d'un client d'une pluralité de clients, d'une entrée client chiffrée représentée par une entrée client chiffrée avec une clé symétrique client (625, 710) ;
la réception, à partir du client, d'une clé symétrique client chiffrée représentée par la clé symétrique client chiffrée avec une clé publique reçue par le client à partir d'un déchiffreur (625, 720) ;
la combinaison de l'entrée client chiffrée avec une combinaison d'entrées client chiffrées reçues à partir au moins d'un sous-ensemble de la pluralité de clients (240, 640, 730) ;
la combinaison de la clé symétrique client chiffrée avec une combinaison de clés symétriques client chiffrées reçues à partir au moins du sous-ensemble de la pluralité de clients (245, 635, 740) ;
la transmission, au déchiffreur, de la combinaison de clés symétriques client chiffrées (270, 650, 760) ;
la réception, à partir du déchiffreur, d'une clé agrégée déchiffrée produite par le déchiffrement, à l'aide d'une clé secrète correspondant à la clé publique, de la combinaison de clés symétriques client chiffrées (280, 770) ; et
le déchiffrement, à l'aide de la clé agrégée déchiffrée, de la combinaison d'entrées client chiffrées pour obtenir une représentation agrégée d'une pluralité d'entrées client (285, 670, 780).

2. Procédé selon la revendication 1, dans lequel l'entrée client chiffrée est produite par le chiffrement de l'entrée client par un schéma de chiffrement homomorphe à clé additive (KAHE) avec la clé symétrique client (225, 530, 710).

3. Procédé selon la revendication 1 ou la revendication 2, dans lequel la clé symétrique client chiffrée est produite par le chiffrement de la clé symétrique client par un schéma de chiffrement homomorphe additif (AHE) avec la clé publique (230, 540, 720).

4. Procédé selon une quelconque revendication précédente, comprenant en outre :
la génération d'une preuve d'agrégation démontrant que chaque entrée client chiffrée est incluse au plus une fois dans la combinaison d'entrées client chiffrées (250, 260, 750) ; et
l'envoi de la preuve d'agrégation à un vérificateur pour validation (260).

5. Procédé selon une quelconque revendication précédente, dans lequel la réception de la clé agrégée déchiffrée comprend en outre :
la réception d'une partie respective de la clé agrégée déchiffrée à partir de chaque déchiffreur d'au moins un nombre seuil de déchiffreurs d'un ensemble distribué de déchiffreurs (660) ; et
la combinaison des parties de la clé agrégée déchiffrée pour obtenir la clé agrégée déchiffrée (665).

6. Procédé selon une quelconque revendication précédente, dans lequel le déchiffreur est mis en œuvre par un sous-ensemble de la pluralité de clients (130, 100, 8029).

7. Procédé selon l'une quelconque des revendications 1 à 5, dans lequel le déchiffreur est mis en œuvre par un ou plusieurs dispositifs informatiques dédiés (130).

8. Système comprenant :
une mémoire (904, 906) ; et
un dispositif de traitement couplé à la mémoire (902), le dispositif de traitement devant réaliser des opérations comprenant :
la réception, à partir d'un client d'une pluralité de clients, d'une entrée client chiffrée représentée par une entrée client chiffrée avec une clé symétrique client (120I, 235, 710) ;
la réception, à partir du client, d'une clé symétrique client chiffrée représentée par la clé symétrique client chiffrée avec une clé publique reçue par le client à partir d'un déchiffreur (120I, 235, 720) ;
la combinaison de l'entrée client chiffrée avec une combinaison d'entrées client chiffrées reçues à partir au moins d'un sous-ensemble de la pluralité de clients (240, 640, 730) ;
la combinaison de la clé symétrique client chiffrée avec une combinaison de clés symétriques client chiffrées reçues à partir au moins du sous-ensemble de la pluralité de clients (245, 635, 740) ;
la transmission, au déchiffreur, de la combinaison de clés symétriques client chiffrées (270, 650, 760) ;
la réception, à partir du déchiffreur, d'une clé agrégée déchiffrée produite par le déchiffrement, à l'aide d'une clé secrète correspondant à la clé publique, de la combinaison de clés symétriques client chiffrées (280, 770) ; et
le déchiffrement, à l'aide de la clé agrégée déchiffrée, de la combinaison d'entrées client chiffrées pour obtenir une représentation agrégée d'une pluralité d'entrées client (285, 670, 780).

9. Système selon la revendication 8, dans lequel l'entrée client chiffrée est produite par le chiffrement de l'entrée client par un schéma de chiffrement homomorphe à clé additive (KAHE) avec la clé symétrique client (225, 530, 710).

10. Système selon la revendication 8 ou la revendication 9, dans lequel la clé symétrique client chiffrée est produite par le chiffrement de la clé symétrique client par un schéma de chiffrement homomorphe additif (AHE) avec la clé publique (230, 540, 720).

11. Système selon l'une quelconque des revendications 8 à 10, dans lequel les opérations comprennent en outre :
la génération d'une preuve d'agrégation démontrant que chaque entrée client chiffrée est incluse au plus une fois dans la combinaison d'entrées client chiffrées (250, 260, 750) ; et
l'envoi de la preuve d'agrégation à un vérificateur pour validation (260).

12. Système selon lune quelconque des revendications 8 à 11, dans lequel la réception de la clé agrégée déchiffrée comprend en outre :
la réception d'une partie respective de la clé agrégée déchiffrée à partir de chaque déchiffreur d'au moins un nombre seuil de déchiffreurs d'un ensemble distribué de déchiffreurs (660) ; et
la combinaison des parties de la clé agrégée déchiffrée pour obtenir la clé agrégée déchiffrée (665).

13. Système selon lune quelconque des revendications 8 à 12, comprenant en outre
une seconde mémoire (904, 906) ; et
un second dispositif de traitement couplé à la mémoire (902), le second dispositif de traitement devant réaliser des opérations du client, les opérations comprenant :
la réception, à partir du déchiffreur, d'une clé publique (215, 510) ;
la génération de la clé symétrique client par un schéma de chiffrement homomorphe à clé additive (KAHE) (220, 520) ;
la production de l'entrée client chiffrée par le chiffrement de l'entrée client par le schéma KAHE à l'aide de la clé symétrique client (225, 530) ; et
la production de la clé symétrique client chiffrée par le chiffrement de la clé symétrique client par un schéma de chiffrement homomorphe additif (AHE) à l'aide de la clé publique (230, 540).

14. Système selon l'une quelconque des revendications 8 à 13, comprenant en outre
une seconde mémoire (904, 906) ; et
un second dispositif de traitement couplé à la mémoire (902), le second dispositif de traitement devant réaliser des opérations du déchiffreur, les opérations comprenant :
la génération d'une paire de clés AHE comprenant la clé secrète et la clé publique (210, 810) ;
la réception, à partir du serveur, de la combinaison de clés symétriques client chiffrées (270, 820) ;
la production de la clé déchiffrée par le déchiffrement, à l'aide de la clé secrète, de la combinaison de clés symétriques client chiffrées (275, 830) ; et
la transmission de la clé déchiffrée au serveur (280, 840).

15. Instructions de programme informatique, éventuellement stockées sur un support de stockage non transitoire lisible par ordinateur (928), qui, lorsqu'elles sont exécutées par un dispositif de traitement d'un serveur (902), amènent le dispositif de traitement à réaliser le procédé selon l'une quelconque des revendications 1 à 7.
